**Europäisches Patentamt**

**European Patent Office**

**Office européen des brevets**

(19)

(11) **EP 1 463 357 A1**

(12) **EUROPÄISCHE PATENTANMELDUNG**

(43) Veröffentlichungstag:
   **29.09.2004 Patentblatt 2004/40**

(51) Int Cl.⁷: **H04Q 7/38**

(21) Anmeldenummer: **03007147.6**

(22) Anmeldetag: **28.03.2003**

(84) Benannte Vertragsstaaten:
   **AT BE BG CH CY CZ DE DK EE ES FI FR GB GR
   HU IE IT LI LU MC NL PT RO SE SI SK TR**
   Benannte Erstreckungsstaaten:
   **AL LT LV MK**

(71) Anmelder: **SIEMENS AKTIENGESELLSCHAFT**
   **80333 München (DE)**

(72) Erfinder: **Kuipers, Martin**
   **13599 Berlin (DE)**

(54) **Verfahren zur Positionsbestimmung einer mobilen Station und
Positionsbestimmungseinheit**

(57)   In einem Verfahren zur Positionsbestimmung einer mobilen Station (MS1) empfängt die mobile Station (MS1) an einer ersten Position (p1) Signale von ersten Stationen (BS1, BS2, BS3, BS4, BS5, BS6) und an zumindest einer zweiten Position (p2) Signale von zweiten Stationen (BS1, BS2, BS3, BS4, BS5, BS7). Zumindest eine der beiden Positionen (p1, p2) wird anhand der an beiden Positionen (p1, p2) empfangenen Signale bestimmt.

FIG 2

EP 1 463 357 A1

**Beschreibung**

Die Erfindung betrifft ein Verfahren zur Positionsbestimmung einer mobilen Station sowie eine entsprechende Positionsbestimmungseinheit.

Bei Mobilfunksystemen der dritten Generation, wie beispielsweise bei nach dem UMTS (Universal Mobile Telecommunications System)-Mobilfunkstandard arbeitenden Systemen, sind in den mobilen Endgeräten Positionsbestimmungsfunktionen vorgesehen.

Bei dem UMTS-Standard sind drei Modi für die Übertragung über die Luftschnittstelle vorgesehen. Dabei handelt es sich um den FDD (Frequency Division Duplex)-Modus, den 3.84 Mchip/s TDD (Time Division Duplex)-Modus und den 1.28 Mchip/s TDD-Modus. Beim FDD-Modus erfolgt die Übertragung in Uplink (UL)-und Downlink (DL)-Richtung auf unterschiedlichen Frequenzen. Uplink bedeutet dabei die Übertragungsrichtung von einem Endgerät bzw. einer mobilen Station zu einem Netzwerkelement das auch als Basisstation oder NodeB bezeichnet wird. Bei Downlink handelt es sich entsprechend um die Übertragungsrichtung von einer Basisstation zu der mobilen Station. Beim TDD-Modus wird nur eine Trägerfrequenz verwendet, wobei durch Zuweisung von Zeitschlitzen eine Trennung der Uplink- und Downlink-Richtung erfolgt. Der Hauptunterschied der zwei TDD-Modi liegt in der geringeren Chiprate des 1.28 Mchip/s TDD-Modus gegenüber dem 3.84 Mchip/s TDD-Modus. Die Teilnehmer werden bei allen Modi über orthogonale Codes getrennt. Dieses codebasierte Mehrfachzugriffsverfahren ist unter der Bezeichnung Code Division Multiple Access (CDMA) bekannt.

Aus der technischen Spezifikation TS 25.305 V5.4.0 des 3GPP (3rd Generation Partnership Project) sind verschiedene Methoden zur Positionsbestimmung einer mobilen Station in einem Funkkommunikationssystem (UMTS) bekannt:

- Cell-ID-Methode
- assisted-GPS-Methode (GPS: Global Positioning System)
- OTDOA (Observed Time Difference of Arrival)-Methode
- OTDOA-IPDL (Idle Period Downlink)

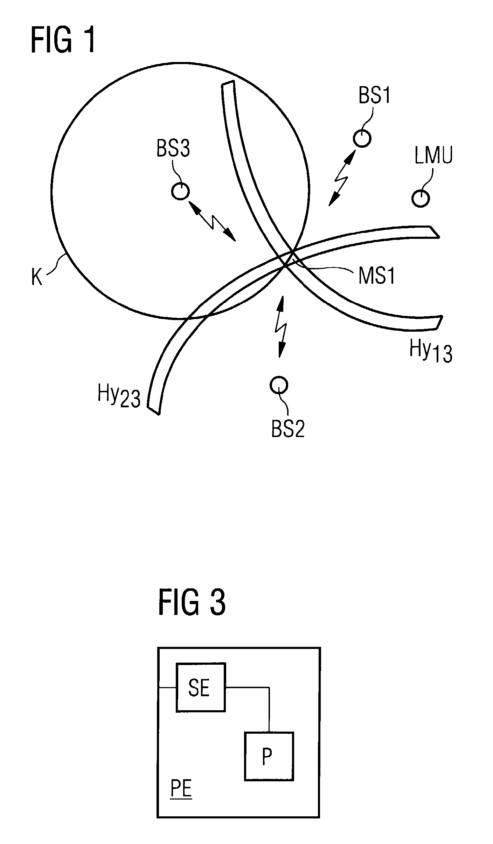

Diese Methoden sind sowohl für den FDD- wie den TDD-Modus vorgesehen. Die OTDOA-Methoden werden nachfolgend mit Bezug auf Figur 1 noch näher erläutert.

In TDMA-Systemen (TDMA: Time Division Multiple Access) wird die OTDOA-Methode als E-OTD (Enhanced Observed Time Difference) bezeichnet.

Um die Genauigkeit der Positionsbestimmung insbesondere der beiden zuletzt genannten Methoden zu erhöhen und somit die hohen Anforderungen der Mobilfunkbehörde der Vereinigten Staaten von Amerika (FCC: Federal Communications Commission) für mobile Stationen in Notfallsituationen zu erfüllen, sind diese beiden Methoden noch weiter zu verbessern.

Werden die beiden zuletzt genannten Methoden in Funkkommunikationssystemen angewandt, in denen die Sendestationen nicht synchronisiert sind, müssen zusätzlich zu Sendestationen weitere Positionsmesseinheiten (engl.: Location Measuring Units [LMU]) verwendet werden, um eine Positionsbestimmung zu ermöglichen.

Der Erfindung liegt daher die Aufgabe zugrunde, ein verbessertes Verfahren zur Positionsbestimmung von mobilen Stationen in Funkkommunikationssystemen anzugeben, das auf die Verwendung zusätzlicher Positionseinheiten verzichtet.

Diese Aufgabe wird mit dem Verfahren gemäß Anspruch 1 sowie der Positionsbestimmungseinheit gemäß dem nebengeordneten Anspruch gelöst.

Vorteilhafte Aus- und Weiterbildungen der Erfindung sind Gegenstand der abhängigen Ansprüche.

In dem erfindungsgemäßen Verfahren zur Positionsbestimmung einer mobilen Station empfängt die mobile Station an einer ersten Position Signale von ersten Stationen und an zumindest einer zweiten Position Signale von zweiten Stationen. Zumindest eine der beiden Positionen wird anhand der an beiden Positionen empfangenen Signale bestimmt.

Durch die Berücksichtigung von an einer ersten und an einer zweiten Position empfangenen Signalen, kann eine zunächst unbekannte Differenz der Sendezeitpunkte der Signale der ersten und zweiten Stationen bestimmt und im Rahmen eines OTDOA-Verfahrens bzw. E-OTD-Verfahrens bei der Positionsbestimmung der mobilen Station berücksichtigt werden. Auch synchronisierte Stationen können aufgrund von Synchronisationsfehlern unterschiedliche Sendezeitpunkte aufweisen, so dass dieses Verfahren sich sowohl für synchronisierte als auch für unsynchronisierte Stationen verwenden lässt.

Die Erfindung kann vorteilhaft in beliebigen Funksystemen verwendet werden. Unter Funksystemen sind beliebige Systeme zu verstehen, in denen eine Datenübertragung zwischen Stationen über eine Funkschnittstelle erfolgt. Die Datenübertragung kann sowohl bidirektional als auch unidirektional erfolgen. Funksysteme sind insbesondere beliebige Mobilfunksysteme beispielsweise nach dem GSM- (Global System for Mobile communications) oder dem UMTS-Standard.

In einer ersten Ausgestaltung der Erfindung ist ein zur Positionsbestimmung aufzustellende Gleichungssystem vorteilhaft lösbar, wenn die ersten und die zweiten Stationen identisch sind. Auf diese Weise lässt sich die Zahl der in die Gleichungen des Gleichungssystems einfließenden Stationen und der Positionen der mobilen Station minimieren.

In einer zweiten Ausgestaltung der Erfindung unterscheiden sich die ersten und zweiten Stationen in mindestens einer Station. Dies ist dann von Vorteil, wenn nicht an allen Positionen die Signale der gleichen Stationen empfangen werden können.

Vorteilhafter Weise sendet die mobile Station Informationen über die an den zumindest zwei Positionen empfangenen Signale an eine Positionsbestimmungseinheit eines Funkkommunikationssystem und die Positionsbestimmung wird dort durchgeführt. Diese Informationen sind beispielsweise die Empfangszeitpunkte oder Differenzen der Empfangszeitpunkte der Signale oder die empfangenen Signale.

In einer anderen Ausgestaltung erfolgt die Positionsbestimmung in der mobilen Station, d. h. die entsprechende Positionsbestimmungseinheit befindet sich in der mobilen Station.

Zweckmäßig ist es, wenn der mobile Station die Positionen der Stationen (z. B. über eine Rundsendung) mitgeteilt werden.

Die Positionsbestimmungseinheit weist alle Merkmale auf, die zur Durchführung des erfindungsgemäßen Verfahrens benötigt werden.

Die Erfindung wird im folgenden anhand von in den Figuren dargestellten Ausführungsbeispielen näher erläutert. Es zeigen:

Fig. 1    eine schematische Darstellung einer Positionsbestimmung nach der OTDOA- und OTDOA-IPDL- Methode,

Fig. 2    eine schematische Darstellung eines Funkkommunikationssystems zur Durchführung einer erfindungsgemäßen Positionsbestimmung und

Fig. 3    eine schematische Darstellung einer Positionsbestimmungseinheit zur Durchführung der Positionsbestimmung gemäß Figur 2.

Gleiche Bezugszeichen in den Figuren bezeichnen gleiche Gegenstände.

Als mobile Station wird im nachfolgenden eine Mobilstation betrachtet. Eine Mobilstation ist beispielsweise ein Mobiltelefon oder auch eine ortsbewegliche Vorrichtung zur Übertragung von Bild- und/oder Tondaten, zum Fax-, Short Message Service SMS- und eMail-Versand und zum Internet-Zugang. Es handelt sich mithin um eine allgemeine Sende- und/oder Empfangseinheit eines Funkkommunikationssystems.

In Figur 1 ist eine bekannte Methode zur Positionsbestimmung schematisch dargestellt. Die dargestellte OTDOA-Methode basiert auf Messungen von über die Luftschnittstelle zwischen mehreren Basisstationen und einer zu lokalisierenden Mobilstation übertragenen Signalen. Gemäß dieser Methode versucht die zu lokalisierende Mobilstation, ein bekanntes Signal von jeweils zwei ortsverschiedenen, benachbarten Basisstationen zu detektieren und die Empfangszeitpunkte zu bestimmen. Die Empfangszeitpunkte des bekannten Signals von den zwei ortsverschiedenen, benachbarten Basisstationen werden dann zur Auswertung an die zuständige Positionsberechnungs-Funktion PCF (Position Calculation Function) derjenigen Basisstation gesendet, welche für die zu lokalisierende Mobilstation verantwortlich ist. Auswerten heißt in diesem Zusammenhang, dass die Positionsberechnungs-Funktion die Zeitdifferenz der Empfangszeitpunkte bzw. die Laufzeitdifferenz berechnet. Durch die Zeitdifferenz wird ein Hyperboloid festgelegt, das den potentiellen Aufenthaltsort der mobilen Station angibt. Liegen Basisstationen und Mobilstation auf der Erdoberfläche, so ist der potentielle Aufenthaltsort eine Hyperbel auf der Erdoberfläche. Durch die Einbeziehung einer weiteren Basisstation befindet sich dann der Aufenthaltsort der mobilen Station im Schnittpunkt der beiden Hyperbeln.

Wie bereits in der Einleitung erwähnt, wird die OTDOA-Methode in TDMA-Systemen (TDMA: Time Division Multiple Access), beispielsweise GSM-Systemen, als E-OTD (Enhanced Observed Time Difference) bezeichnet.

Figur 1 zeigt drei synchronisierte Basisstationen BS1, BS2 und BS3 und eine Mobilstation MS1. Durch die Differenz der Empfangszeitpunkte der Signale der ersten Basisstation BS1 und der dritten Basisstation BS3 ist die Hyperbel $Hy_{13}$ festgelegt. Entsprechend ist die Hyperbel $Hy_{23}$ durch die Differenz der Empfangszeitpunkte der Signale der zweiten Basisstation BS2 und der dritten Basisstation BS3 festgelegt. An dem Schnittpunkt der beiden Hyperbeln $Hy_{13}$, $Hy_{23}$ befindet sich die Mobilstation MS1. Für eine genauere Positionsbestimmung ist noch mindestens eine weitere Information nötig. So kann entweder

a) eine weitere OTDOA-Positionsbestimmung zu einer vierten Basisstation erfolgen, oder

b) in Zellen mit Sektorisierung die Information über den Sektor, in der sich die Mobilstation befindet, zur Entscheidung herangezogen werden, oder

c) eine RTT-Messung (RTT: Round Trip Time) durchgeführt werden. Dabei wird, wie in Figur 1 dargestellt, aufgrund der Hin- und Rücklaufzeit eines zwischen der dritten Basisstation BS3 und der Mobilstation MS1 übertragenen bekannten Signals, ein Kreis K ermittelt, auf dem sich die Mobilstation befindet.

Sind die Basisstationen BS1, BS2 und BS3 nicht synchronisiert, müssen zusätzlich von einer Positionsbestimmungseinheit LMU mit bekanntem und festem Ort Differenzen der Empfangszeitpunkte der Signale ermittelt werden. Durch diese zusätzlichen Messwerte können die Unterschiede der Sendezeitpunkte der Basisstationen bestimmt und berücksichtigt werden. Die auf diese Weise erzielte Genauigkeit bei der Positionsbestimmung der Mobilstation MS1 entspricht derjenigen, die ohne Positionsbestimmungseinheit LMU mit synchronisierten Basisstationen BS1, BS2 und BS3 erreicht wird.

Das zu detektierende Signal kann das Signal des Common Pilot Channel bzw. CPICH sein, das kontinuierlich von den Basisstationen gesendet wird, aber auch ein anderes Pilot-Signal. Selbstverständlich kann das zu detektierende Signal auf einem beliebigen Kontrollkanal gesendet werden, beispielsweise auf dem BCCH (Broadcast Control Channel) eines GSM-Systems. Im folgenden wird zur Vereinfachung vom CPICH ausgegangen. Zur Unterscheidung der CPICH-Signale ist jeder Basisstation ein anderer Verwürflungscode zugeordnet. Somit ist es dann möglich, die empfangenen CPICH-Signale auseinander zu halten und den entsprechenden Basisstationen zuzuordnen sowie die erforderlichen Zeitdifferenzen zu berechnen.

Mit der OTDOA-Methode erreicht man eine Genauigkeit in der Positionsbestimmung einer mobilen Station von ungefähr 80 bis 100 m. Eine Verbesserung der OTDOA-Methode liefert die OTDOA-IPDL-Methode. Die OTDOA-IPDL-Methode ist eine Erweiterung für den Fäll, dass Signale einer Verbindungs-Basisstation über die die Mobilstation an ein Funkkommunikationsnetz angebunden ist, Signale anderer Basisstationen überdecken. Dabei wird eine Detektion von Signalen der anderen Basisstationen erschwert oder sogar unmöglich. Dies gilt insbesondere für Signale auf dem gemeinsamen Steuerungskanal, den alle Basisstationen verwenden und der üblicherweise zur Zeitdifferenzbestimmung verwendet wird. Damit eine Detektion von Signalen anderer Basisstationen möglich ist, werden bei der OTDOA-IPDL-Methode die Übertragungen der Verbindungs-Basisstation für kurze Zeitperioden ausgeschaltet. Die entstehenden Pausen hinsichtlich der Übertragung dieser Verbindungs-Basisstation können dann von der mobilen Station genutzt werden, um die Empfangszeitpunkte der Signale der anderen, benachbarten Basisstationen zu detektieren. Diese Pause kann mehrere Symbole lang sein, in der Regel 5 bis 10 Symbole. Dabei entspricht die Länge eines Symbols beispielsweise im UMTS-FDD-Modus 256 Chips und im TDD-Modus maximal 16 Chips, wobei ein Chip ungefähr 0,26 μs lang ist bei einer Chipfrequenz von 3.84 Mchips/s. Mit der OTDOA-IPDL-Methode erreicht man eine Genauigkeit in der Positionsbestimmung von bis zu ca. 20 m.

Im folgenden wird die Erfindung am Beispiel eines Mobilfunksystems nach dem UMTS-Standard beschrieben, ohne jedoch darauf beschränkt zu sein.

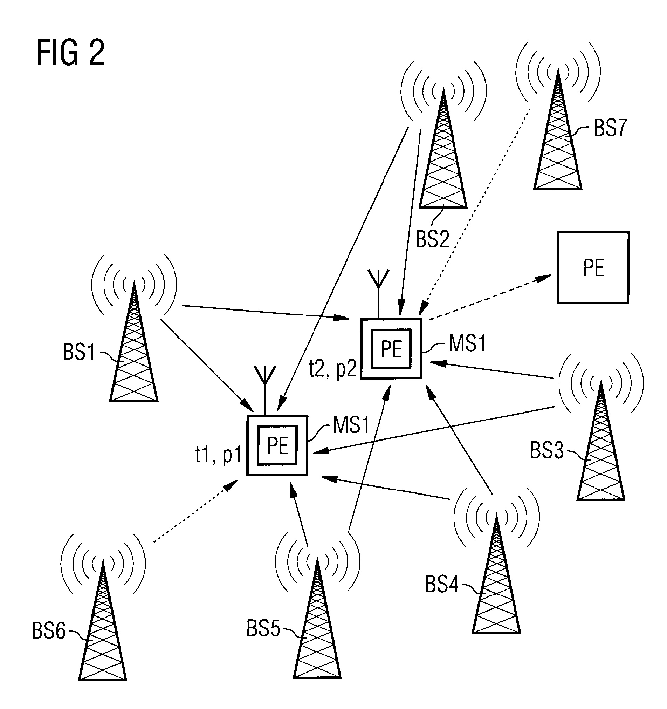

In Figur 2 ist schematisch ein erstes, bevorzugtes Ausführungsbeispiel einer erfindungsgemäßen Positionsbestimmung einer Mobilstation dargestellt. Zu einem ersten Zeitpunkt t1 übertragen eine erste Basisstation BS1 und weitere vier Basisstationen BS2, BS3, BS4 und BS5 Signale an eine Mobilstation MS1. Die Basisstationen übertragen ihre Signale unsynchronisiert, d. h. die Signale haben unterschiedliche Sendezeitpunkte. Die Position der Mobilstation MS1 zum Zeitpunkt t1 ist die erste Position p1. Zum Zeitpunkt t2 befindet sich die Mobilstation MS1 an einer anderen Position, einer zweiten Position p2, und empfängt Signale von den fünf Basisstationen BS1, BS2, BS3, BS4 und BS5. Die jeweiligen Empfangszeitpunkte der Signale oder die Differenz der Empfangszeitpunkte speichert die Mobilstation MS1 zu beiden Zeitpunkten t1, t2 in einem Speicher.

Zum Zeitpunkt t2 liegt eine Anfrage zur Positionsbestimmung für die Mobilstation MS1 vor. Diese Anfrage wird der Mobilstation MS1 vom Funkkommunikationssystem mitgeteilt. Selbstverständlich kann die Mobilstation eine Positionsbestimmung, auch ohne eine Anfrage aus dem Funkkommunikationssystem, selbstständig einleiten.

Ohne darauf beschränkt zu sein wird in diesem Ausführungsbeispiel als Bezugszeit der Empfangszeitpunkt der Signale der ersten Basisstation BS1 verwendet. Für die berechneten Differenzen $OTD_{1k}(p1)$ der Empfangszeitpunkte an der ersten Position p1 gilt folgender Zusammenhang:

$$OTD_{1k}(p1) = GTD_{1k}(p1)+RTD_{1k}$$

Dabei gibt $GTD_{1k}(p1)$ die wahre Laufzeitdifferenz der Signale der ersten Basisstation BS1 und der Signale der anderen Basisstationen BS2, BS3, BS4 und BS5 an. $GTD_{1k}(p1)$ ist somit äquivalent zu der Differenz der Entfernungen zwischen der ersten Position p1 und der ersten Basisstation BS1 und zwischen der ersten Position p1 und der k-ten Basisstation BS2, BS3, BS4, BS5 dividiert durch die Ausbreitungsgeschwindigkeit der Signale:

$$GTD_{1k}(p1) = \frac{1}{C}\left( \sqrt{(X_{p1} - X_{BS1})^2 + (Y_{p1} - Y_{BS1})^2} - \sqrt{(X_{p1} - X_{BSk})^2 + (Y_{p1} - Y_{BSk})^2} \right)$$

Es entspricht C der Ausbreitungsgeschwindigkeit der Signale und $X_{p1}$, $Y_{p1}$, $X_{BS1}$, $Y_{BS1}$, $X_{BSk}$, $Y_{BSK}$ den X- und Y-Koordinaten der ersten Position p1 der Mobilstation MS1 bzw. der Positionen der ersten Basisstation BS1 und der weiteren Basisstationen BS2, BS3, BS4 und BS5.

**$RTD_{1k}$** stellt die Differenz der Sendezeitpunkte der Signale der ersten Basisstation BS1 und der weiteren Basisstationen BS2, BS3, BS4 und BS5 dar.

Für die erste Position p1 ergeben sich somit vier Gleichungen für die vier gemessenen Differenzen **$OTD_{1k}$(p1)** der Empfangzeitpunkte der Signale. Auch für die zweite Position p2 ergeben sich vier Gleichungen für die vier gemessenen Differenzen **$OTD_{1k}$(p2):**

$$OTD_{1k}(p2) = GTD_{1k}(p2) + RTD_{1k}$$

Das gesamte Gleichungssystem besteht aus acht Gleichungen und acht Unbekannten und ist somit lösbar. Die Unbekannten sind $X_{p1}$, $Y_{p1}$, $X_{p2}$, $Y_{p2}$, $RTD_{12}$, $RTD_{13}$, $RTD_{14}$ und $RTD_{15}$. Durch Lösung des Gleichungssystems erhält die Mobilstation MS1 die Koordinaten der ersten und der zweiten Position p1, p2, d. h. sie bestimmt die aktuelle Position zum Zeitpunkt t2 der Positionsanfrage und eine frühere Position jeweils in zwei Dimensionen.

Die Mobilstation MS1 verfügt über einen Speicher zum Speichern der Empfangszeitpunkte der Signale an unterschiedlichen Positionen sowie zum Speichern weiterer Werte, die zur Lösung des Gleichungssystems benötigt werden. Selbstverständlich kann sie auch die Differenzen der Empfangszeitpunkte speichern. Zur Lösung des Gleichungssystems dient eine Positionsbestimmungseinheit PE der Mobilstation MS1.

Die Positionen der Basisstationen BS1, BS2, BS3, BS4, BS5, BS6 und BS7 sind der Mobilstation MS1 bekannt. Sie werden ihr entweder beim Verbindungsaufbau, bei einer Positionsanfrage oder zeitlich wiederkehrend entweder über die zugewiesene Verbindung oder über eine Rundsendung (engl.: broadcast) mitgeteilt.

Selbstverständlich kann die Position der Mobilstation MS1 auch in drei Dimensionen bestimmt werden. Hierzu können zusätzliche Stationen und/oder weitere Differenzen der Empfangszeitpunkte an weiteren Positionen der Mobilstation MS1 verwendet werden. Auch eine zweidimensionale Positionsbestimmung kann unter Verwendung einer anderen Anzahl von Basisstationen und/oder Positionen p1, p2 durchgeführt werden als dies in Figur 2 dargestellt ist.

Werden Signale von zwei Positionen der Mobilstation zur zweidimensionalen Positionsbestimmung verwendet, so sind dazu (siehe Figur 2) mindestens fünf identische Basisstationen nötig. Werden hingegen Signale von mindestens drei Positionen der Mobilstation MS1 verwendet, so genügen an jeder Position die Signale von genau vier identischen Basisstationen. Werden jedoch an mindestens drei Positionen die Signale von jeweils mindestens fünf Basisstationen empfangen, so können sich die Basisstationen an je zwei Positionen um mindestens eine Basisstation unterscheiden. Bei insgesamt sieben Basisstationen, durchnummeriert von 1 bis 7, werden an einer ersten Position Signale der Basisstationen 1, 2, 3, 4 und 5, an einer zweiten Position Signale der Basisstationen 1, 2, 3, 4 und 6 und an einer dritten Position Signale der Basisstationen 1, 2, 3, 5 und 7 empfangen. Die ergibt ein lösbares Gleichungssystem mit 12 Unbekannten und 12 Gleichungen.

Eine erfindungsgemäße Positionsbestimmung kann mit einer beliebigen Kombination von Basisstationen und Positionen der Mobilstation erfolgen, solange das Gleichungssystem lösbar ist. Es werden somit immer mindestens ebenso viele Gleichungen wie Unbekannte benötigt. Ist das Gleichungssystem überbestimmt, d. h. gibt es mehr Gleichungen als Unbekannte, so führt dies vorteilhaft zu einer Erhöhung der Genauigkeit der Positionsbestimmung. Zur weiteren Erhöhung der Genauigkeit der Positionsbestimmung können an den Positionen der Mobilstation zusätzlich RTT-Messungen für zumindest jeweils eine Basisstation durchgeführt werden.

In einem zweiten Ausführungsbeispiel empfängt die Mobilstation an der Position p1 zusätzlich Signale von einer sechsten Basisstation BS6. An der zweiten Position p2 ist die sechste Basisstation BS6 zu weit entfernt, um empfangen zu werden. Die Mobilstation MS1 empfängt aber zusätzlich Signale von einer siebten Basisstation BS7, die sich nun in Empfangsreichweite befindet. Die zusätzliche Übertragung der Signale der sechsten und siebten Basisstation BS6, BS7 ist durch gepunktete Linien dargestellt. Zum ersten und zweiten Zeitpunkt t1, t2 ergibt sich jeweils eine zusätzliche Unbekannte und eine zusätzliche Gleichung, so dass weiterhin ein lösbares Gleichungssystem vorliegt, obwohl Signale teilweise unterschiedlicher Basisstationen verwendet wurden.

Die Mobilstation MS1 bestimmt erfindungsgemäß auch ohne eine vorliegende Positionsanfrage wiederholt für unterschiedliche Positionen die Empfangszeitpunkte von Signalen der Basisstationen BS1, BS2, BS3, BS4, BS5, BS6, BS7. Dadurch, dass die Empfangszeitpunkte der Signale an möglichst vielen Positionen gespeichert werden, liegt bei einer Positionsanfrage immer ein hinreichend großer Datenbestand vor, der eine Positionsbestimmung auch dann ermöglicht, wenn sich die Mobilstation MS1 bereits seit einiger Zeit nicht mehr bewegt hat.

In einem weiteren Ausführungsbeispiel übermittelt die Mobilstation MS1 eine Information über die empfangenen Signale (z. B. die Empfangszeitpunkte der Signale bzw. die Differenzen der Empfangszeitpunkte), die sie an den beiden Positionen p1, p2 gespeichert hat, an eine Positionsbestimmungseinheit PE des Funkkommunikationssystems. In der Positionsbestimmungseinheit PE wird das Gleichungssystem gelöst und die Position p2 zum Zeitpunkt t2 der Positionsanfrage sowie zu früheren Zeitpunkten t1 bestimmt. Die Positionsbestimmungseinheit PE kann sowohl im Funkzugangsnetz (UTRAN: Universal Terrestrial Radio Access Network) des Funkkommunikationssystems als auch in einem an das Funkzugangsnetz angeschlossenen Kernnetz (engl: core network) angeordnet sein. Dem Kernnetz sind dabei üblicherweise die Positionen der Basisstationen (BS1, BS2, BS3, BS4, BS5, BS6, BS7) bekannt, während sie an das Funkzugangsnetz gegebenenfalls übermittelt werden.

Die Positionsbestimmungseinheit PE des Funkkommunikationssystems ist so ausgebildet, dass sie für eine Vielzahl von Mobilstationen zuständig ist.

Eine Positionsbestimmungseinheit, die in Figur 3 schematisch dargestellt ist, weist eine Sende- und Empfangseinheit SE auf, die Informationen über die Signale der Basisstationen (BS1, BS2, BS3, BS4, BS5, BS6, BS7) empfängt und die diese Informationen einem Prozessor P zur Bestimmung der Positionen p1, p2 der Mobilstation MS1 zuführt. Die Informationen sind beispielsweise die empfangenen Signale der Basisstationen (BS1, BS2, BS3, BS4, BS5, BS6, BS7 oder die Empfangszeitpunkte oder Differenzen der Empfangszeitpunkte der Signale der Basisstationen (BS1, BS2, BS3, BS4, BS5, BS6, BS7).

**Patentansprüche**

1. Verfahren zur Positionsbestimmung einer mobilen Station (MS1), bei dem

- die mobile Station (MS1) an einer ersten Position (p1) Signale von ersten Stationen (BS1, BS2, BS3, BS4, BS5, BS6) empfängt,
- die mobile Station (MS1) an zumindest einer zweiten Position (p2) Signale von zweiten Stationen (BS1, BS2, BS3, BS4, BS5, BS7) empfängt,
- und zumindest eine der beiden Positionen (p1, p2) anhand der an beiden Positionen (p1, p2) empfangenen Signale bestimmt wird.

2. Verfahren nach Anspruch 1, bei dem die ersten und die zweiten Stationen (BS1, BS2, BS3, BS4, BS5) identisch sind.

3. Verfahren nach Anspruch 1, bei dem die ersten und zweiten Stationen (BS1, BS2, BS3, BS4, BS5, BS6, BS7) sich in mindestens einer Station (BS6, BS7) unterscheiden.

4. Verfahren nach einem der Ansprüche 1 bis 3, bei dem die mobile Station (MS1) Informationen über die an den zumindest zwei Positionen (p1, p2) empfangenen Signale an eine Positionsbestimmungseinheit (PE) eines Funkkommunikationssystem sendet und die Positionsbestimmung dort durchgeführt wird.

5. Verfahren nach einem der Ansprüche 1 bis 3, bei dem die Positionsbestimmung in der mobilen Station (MS1) erfolgt.

6. Verfahren nach Anspruch 5, bei dem der mobile Station (MS1) die Positionen der Stationen mitgeteilt werden.

7. Positionsbestimmungseinheit (PE) zur Bestimmung der Position (p1, p2) einer mobilen Station (MS1),

- mit einer Einheit (SE) zum Empfang von Informationen über Signale, die eine mobile Station (MS1) an einer ersten Position (p1) von ersten Stationen (BS1, BS2, BS3, BS4, BS5, BS6) empfängt, und zum Empfang von Informationen über Signale, die die mobile Station (MS1) an zumindest einer zweiten Position (p2) von zweiten Stationen (BS1, BS2, BS3, BS4, BS5, BS7) empfängt,
- und mit einer Auswerteeinheit P, die zumindest eine der beiden Positionen (p1, p2) der mobilen Station (MS1) anhand der beiden Positionen (p1, p2) zugeordneten Informationen bestimmt.

FIG 1

BS1

BS3

LMU

MS1

K

Hy₁₃

Hy₂₃

BS2

FIG 3

SE

P

PE

FIG 2

**Europäisches Patentamt**

# EUROPÄISCHER RECHERCHENBERICHT

Nummer der Anmeldung

EP 03 00 7147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 137 305 A (ERICSSON TELEFON AB L M) 26. September 2001 (2001-09-26) * Seite 3, Zeile 12 - Zeile 18 * * Seite 3, Zeile 44 - Zeile 47 * * Seite 3, Zeile 26 - Zeile 29 * | 1,2 | H04Q7/38 |
| Y | --- | 3-7 | |
| Y | EP 1 289 331 A (NOKIA CORP) 5. März 2003 (2003-03-05) * Spalte 4, Zeile 2 - Zeile 20 * * Spalte 3, Zeile 42 - Zeile 46 * * Spalte 2, Zeile 35 - Zeile 46 * * Spalte 1, Zeile 41 - Zeile 43 * --- | 3-7 | |
| A | DRANE C ET AL: "POSITIONING GSM TELEPHONES" IEEE COMMUNICATIONS MAGAZINE, IEEE SERVICE CENTER. PISCATAWAY, N.J, US, Bd. 36, Nr. 4, 1. April 1998 (1998-04-01), Seiten 46-54,58, XP000752570 ISSN: 0163-6804 * das ganze Dokument * --- | 1-7 | |
| A | RAPPAPORT T S ET AL: "POSITION LOCATION USING WIRELESS COMMUNICATIONS ON HIGHWAYS OF THE FUTURE" IEEE COMMUNICATIONS MAGAZINE, IEEE SERVICE CENTER. PISCATAWAY, N.J, US, Bd. 34, Nr. 10, 1. Oktober 1996 (1996-10-01), Seiten 33-41, XP000694477 ISSN: 0163-6804 * das ganze Dokument * ----- | 1-7 | |

RECHERCHIERTE SACHGEBIETE (Int.Cl.7)

H04Q
G01S

Der vorliegende Recherchenbericht wurde für alle Patentansprüche erstellt

| Recherchenort | Abschlußdatum der Recherche | Prüfer |
|---|---|---|
| BERLIN | 3. September 2003 | BITTERMANN, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 03 00 7147

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1137305 | A | 26-09-2001 | EP | 1137301 A1 | 26-09-2001 |
| | | | EP | 1137305 A1 | 26-09-2001 |
| | | | US | 2001046869 A1 | 29-11-2001 |
| EP 1289331 | A | 05-03-2003 | US | 2003040323 A1 | 27-02-2003 |
| | | | EP | 1289331 A2 | 05-03-2003 |

EPO FORM P0461

Für nähere Einzelheiten zu diesem Anhang : siehe Amtsblatt des Europäischen Patentamts, Nr.12/82